# EUROPEAN PATENT SPECIFICATION

(11) **EP 2 851 570 B1**
(45) Date of publication and mention of the grant of the patent: **03.10.2018**
(21) Application number: 14181357.6
(22) Date of filing: 19.08.2014
(51) Int. Cl.: F16B 33/00, F16B 39/282

(54) **Plastic fastening element and fastening asssembly with same**
Befestigungselement aus Kunststoff und Befestigungsbaugruppe damit
Élément de fixation en plastique et ensemble de fixation doté de celui-ci

(30) Priority: 20.09.2013 DE 102013110429
(43) Date of publication of application: 25.03.2015
(73) Proprietor: Newfrey LLC, New Britain, CT 06053 (US)
(72) Inventor: Schmidt, Thomas, 35394 Giessen (DE); Kempf, Christian, 35394 Giessen (DE); Reindl, Johann-Adalbert, 35394 Giessen (DE)
(74) Representative: SBD IPAdmin

(56) References cited:
- DE-A1- 3 411 812
- DE-A1- 3 641 836
- DE-A1- 3 807 626
- DE-A1-102005 002 953
- DE-U- 7 123 208
- DE-U1-202009 009 859
- FR-A1- 2 981 708
- NL-A- 6 600 258
- US-A- 2 037 586
- US-A- 2 096 040
- US-A1- 2008 166 204
- US-A1- 2012 141 225

## Description

The present invention relates to a plastic fastening element comprising a main body which has a thread portion with a thread axis and on which a flange facing is formed which is oriented transversely, in particular perpendicularly, to the thread axis and is arranged around the thread portion, the flange facing being formed so as to bear against a surface of a component to be fastened by means of the fastening element.

The present invention further relates to a fastening assembly comprising such a fastening element and also comprising a mating fastening element, which has a mating thread portion corresponding to the thread portion of the fastening element.

Lastly, the present invention relates to a motor vehicle comprising a support, to which a component is fastened by means of a fastening assembly, the mating fastening element being fixed to the support and a portion of the component being arranged between the support and the flange facing.

Fastening elements and fastening assemblies of this type are known in general. To improve the retaining force, it is known for example from document JP 7217634 A to provide a flange facing on the underside of a screw head with a radial fluting, of which individual teeth are oriented radially and are matched in terms of pitch to the thread of the screw.

A further screw for fixing plastic components comprising a radial fluting is known from document JP 8193611 A, the individual teeth of the fluting being arranged on the outer periphery of the flange facing.

To fix components made of plastic to a support, it is also known for example to weld to a support a mating fastening element in the form of a stud. A plastic nut which is formed, for example in a polygonal manner, on the outer periphery and has a pre-shaped thread is provided as fastening element. A portion of a plastic component is arranged between a flange facing of this plastic nut and the support. If forces running transverse to the longitudinal axis or thread axis are exerted onto the component and exceed specific limits, the retaining force of the fastening assembly thus formed may be exceeded.

It is known, for example in the field of automotive engineering, that components are fixed to a support in the form of a vehicle body portion. In one application, the component serves as a holder for a bumper. When, in this case, very high forces are exerted onto the bumper, the retaining force of the fastening assembly comprising such a plastic nut may be exceeded.

One possibility for solving this problem lies in using metal nuts instead of plastic nuts. One problem here is that these metal nuts tend to damage the surface of the thread portion of the stud. This is because the stud is often a stud made of metal, which is coated on its surface, for example by passivation and/or a coat of lacquer. The damage to this coating may lead to corrosion on the stud.

From document DE 20 2009 009 859 U1 a connecting element is know with a shaft portion made from first material and a plate element formed at the shaft portion, wherein the plate element is at least partly made from a second material, wherein the plate element comprises a friction surface for bearing against an arrangement which is to be connected, wherein a plurality of protrusions is provided at the friction surface.

From document DE 3 411 812 A1 a screw connection for various components provided with an entire corrosion coating is known, wherein in the region where the nut or the screw had bears against a flat side, directed towards the components, of a machine element, the screw connection exhibits accurate or circular circumferential beads which run concentrically with respect to the screw axis, wherein these beads act like cutting edges and penetrate into the coating.

From document DE 3 807 626 A1 a mounting device for a component is known, wherein a nut is provided on its side ponding towards the component with a spacer which leaves a gap between the component and the end of the nut when in contact with the component, wherein the gap is at least slightly larger than the thickness of a component carrier and can be deformed elastically and/or plastically under pressure. The nut which is prefixed on the threaded journal is inserted through a perforation in the component carrier and rotated until it is blocked by circumferential stops on the component carrier inside. Further rotation of the component then leads to it being securely mounted on the component carrier.

On this basis, the object of the invention is to specify an improved fastening assembly, and also a vehicle comprising an improved fastening assembly.

This object is achieved with a fastening assembly in accordance with claim 1.

Lastly, the above object is achieved by a motor vehicle comprising a support, to which a component is fastened by means of a fastening assembly according to the invention, the mating fastening element being fixed to the support and a portion of the component being arranged between the support and the flange facing of the fastening element, and the arcuate protrusion cutting or pressing a groove extending in the peripheral direction into a surface of the component portion as a result of the thread engagement.

In the present case, an arcuate protrusion is understood in particular to mean a protrusion of which the extension in the peripheral direction is at least twice as large, in particular at least four times as large, as its extension in the radial direction. An arcuate protrusion of this type is suitable for cutting or pressing a circular groove into a surface of a component.

The component in the present case is preferably likewise a component made of plastic. The fastening element in the present case is preferably a one-piece element which is produced from plastic, in particular from PA, for example PA6.6. It is also preferable if the plastic material of the fastening element is glass-fibre-reinforced.

The arcuate protrusion is preferably formed in a sharp-edged manner and/or preferably has the contour of a lathe tool cutting edge.

Since, in the case of a fastening assembly according to the invention, the arcuate protrusion lies in the groove pressed or cut by the arcuate protrusion, much higher forces can be exerted onto the component in the direction transverse to the longitudinal axis. It is thus possible, with the above-mentioned application, to use fastening elements according to the invention, in particular in the form of nuts, instead of metal nuts, for example.

The thread portion of the fastening element is preferably a coarse thread portion, for example of the type T6. The thread portion may also be a metric thread however and/or may have other dimensions.

Due to the fact that the fastening element is produced from plastic and has a pre-shaped thread portion, the surface of the mating fastening element is not damaged in the region of the mating thread portion. Corrosion problems can thus be avoided.

Lastly, the length of the thread portion in the longitudinal direction can be selected such that the mating thread portion is completely covered, with the result that corrosion problems can also be mitigated as a result of this measure.

The fastening element and the thread portion are formed such that a self-locking effect is produced in the fastening state, with the result that the fastening element cannot detach by itself as a result of vibration or the like.

The fastening element is therefore suitable in particular for use in automotive engineering.

It goes without saying that the component to be fastened may be part of a bumper construction (for example a bumper guide rail), but may also be part of a housing of an air-conditioning and/or heating apparatus, may be a cover, or may be a side skirt, etc., that is to say generally components made of plastic, on which very high demands are placed in terms of strength.

The mating fastening element is preferably produced from metal and is preferably coated at least in the region of the mating thread portion, for example by a passivation layer and/or a coat of lacquer.

With the fastening element of the fastening assembly according to the invention, it is preferable if the arcuate protrusion is oriented concentrically with the thread axis.

In particular, it is preferable here if the radial width of the protrusion is constant over the peripheral length of the protrusion.

According to a further preferred embodiment, the arcuate protrusion is distanced from a radial inner face and/or from a radial outer face of the flange facing.

The fastening element may thus be produced more easily. Furthermore, it is generally ensured as a result of this measure that the surface portion of the component to be provided with the groove can be distanced from the longitudinal axis such that the component may have an opening for example, through which the fastening element or the mating fastening element extends.

In accordance with a further embodiment that is preferred on the whole, the axial height of the arcuate protrusion increases in the peripheral direction in accordance with the thread portion.

As a result, the first contact between the arcuate protrusion and the surface of the component takes place initially only in the region of the greatest height of the protrusion when the fastening element is screwed to the mating fastening element. Only with continuing rotation does the arcuate protrusion come into contact over its entire peripheral length with the surface of the component. The groove to be provided can thus be formed gradually by means of the screwing action.

Here, the orientation is preferably such that, during the screwing process, the portion of the arcuate protrusion with a lower axial height is arranged to the front. Jamming can thus be avoided. The orientation in the peripheral direction is consequently produced by the thread portion or the pitch direction thereof (right-hand thread or left-hand thread).

The maximum axial height of the arcuate protrusion is preferably less than 2 mm here, in particular less than 1 mm. The maximum axial height of the arcuate protrusion with respect to the flange facing particularly preferably lies in a range from 0.25 mm to 0.5 mm.

It is further preferable if the maximum axial height is generally greater than 0.1 mm, in particular greater than 0.2 mm.

It is further advantageous on the whole if the arcuate protrusion in radial section has a shape tapering from the flange facing.

The shape of the arcuate protrusion in radial section may be semi-circular or trapezoidal here, for example.

It is particularly preferred however if the shape of the protrusion in radial section is triangular. Furthermore, the free end of the arcuate protrusion as viewed in the axial direction preferably tapers, whereby a sharp edge is established, which can cut or press into the surface of the component relatively easily.

In accordance with a further embodiment that is preferred on the whole, the arcuate protrusion extends over an angle in a range from 5° to 180°, in particular over a range from 10° to 90°, and particularly preferably in a range from 30° to 80°.

It is generally possible for just a single arcuate protrusion to be provided on the flange facing. It is particularly preferable however if a plurality of arcuate protrusions having the same radius are formed on the flange facing. The arcuate protrusions here preferably each have the same shape, both in terms of their peripheral length and their height and radial width.

It is particularly preferable if the number of arcuate protrusions having the same radius lies in a range from 3 to 10, and preferably in a range from 4 to 8, inclusive in each case.

In accordance with a further preferred embodiment, at least two of the arcuate protrusions are distanced from one another here in the peripheral direction.

Here, it is particularly preferable if the spacing in the peripheral direction is in each case smaller than the length of the arcuate protrusions in the peripheral direction.

The ratio of peripheral length of the arcuate protrusions to the peripheral length of the spacings thereof preferably lies in a range from 3:1 to 1.1:1.

In accordance with a further embodiment that is preferred on the whole, at least one first arcuate protrusion which is distanced by a first radius from the thread axis is formed on the flange facing, at least one second arcuate protrusion being formed on the flange facing and being distanced by a second radius from the thread axis, the radii being different.

It is thus possible to utilize the flange facing even more effectively and to increase the retaining forces in the radial direction.

In accordance with a particularly preferred embodiment, a first plurality of first arcuate protrusions which are distanced by a first radius from the thread axis are formed on the flange facing, at least one second plurality of second arcuate protrusions being formed on the flange facing and being distanced by a second radius from the thread axis, the radii being different.

The details stated above apply both to the first and to the second arcuate protrusions in each case.

The ratio of the peripheral lengths of the arcuate first and second protrusions may lie in a range from 1:2 to 2:1 and is preferably equal to 1. The radial widths of the first and the second protrusions are preferably identical.

In accordance with a particularly preferred embodiment, the first and the second arcuate protrusions overlap in the peripheral direction.

With a finished fastening assembly, in which the first and the second arcuate protrusions each have cut or pressed grooves having two different radii into the surface of the component, retaining forces can thus be produced in the radial direction between protrusion and groove, largely independently of the peripheral position in which a disruptive force for example is effective.

It is generally possible for the fastening element to be formed as a screw, an underside of a screw head being formed as a flange facing.

It is preferable if the fastening element is a nut comprising an inner thread as thread portion. The flange facing in this embodiment may be formed at an axial end of the nut. An outer peripheral portion of the nut may preferably be provided with a polygon shape in order to be able to screw on the nut.

It goes without saying that the features mentioned above and those yet to be explained below can be used not only in each specified combination, but also in other combinations without departing from the scope of the present invention.

Exemplary embodiments of the invention are illustrated in the drawing and will be explained in greater detail in the following description. In the drawing:
Figure 1 shows a schematic longitudinal sectional view through a first embodiment of a fastening assembly according to the invention before a screwing process;
Figure 2 shows a sectional view along the line II-II in Figure 1;
Figure 3 shows a longitudinal sectional view through a further embodiment of a fastening assembly according to the invention after a screwing process;
Figure 4 shows a plan view of a flange facing of a further embodiment of a fastening element of the fastening assembly according to the invention;
Figure 5 shows a plan view of an isolated arcuate protrusion of the fastening element in Figure 4;
Figure 6 shows a sectional view along the line VI-VI in Figure 5;
Figure 7 shows a view, comparable to Figure 6, of an alternative embodiment of an arcuate protrusion;
Figure 8 shows an illustration, comparable to Figure 6, of a further alternative embodiment of an arcuate protrusion;
Figure 9 shows a sectional view along the line IX-IX in Figure 5;
Figure 10 shows an illustration, comparable to Figure 9, of an alternative embodiment of an arcuate protrusion;
Figure 11 shows a perspective plan view of a further embodiment of a fastening element of the fastening assembly according to the invention;
Figure 12 shows a longitudinal sectional view through the fastening element in Figure 11;
Figure 13 shows a perspective view of the fastening element in Figures 11 and 12 from below;
Figure 14 shows a schematic illustration of a motor vehicle comprising a bumper assembly; and
Figure 15 shows a view of a detail XV in Figure 14.

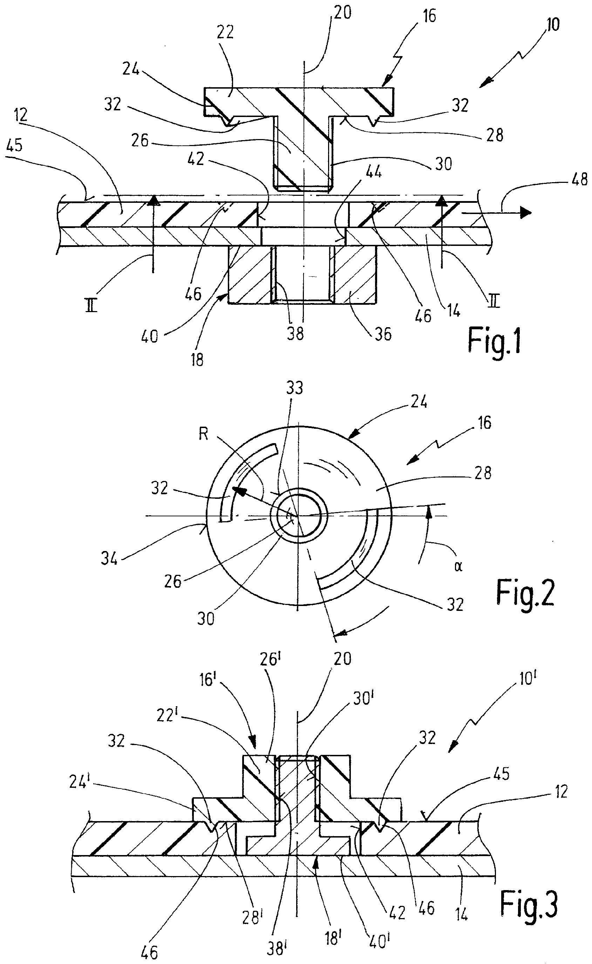

A first embodiment of a fastening assembly according to the invention is illustrated schematically in longitudinal section in Figures 1 and 2 and is denoted generally by 10.

The fastening assembly 10 is used to fix a component 12, which in particular is produced from plastic, to a support 14, which may be a metal element for example, in particular a sheet metal element.

The fastening assembly 10 includes a fastening element 16 and also a mating fastening element 18. The mating fastening element 18 is fixedly connected to the support 14. A longitudinal axis of the fastening assembly 10 is shown at 20.

The fastening element 16 includes a main body 22 made of plastic, which for example may be glass-fibre-reinforced. The fastening element 16 is preferably formed in one piece. A flange portion 24 is provided on the main body 22 as well as a shaft portion 26 adjoining said flange portion in the longitudinal direction. The flange portion 24 has a diameter larger than the shaft portion 26. An underside of the flange portion 24 forms a flange facing 28. A thread portion 30 in the form of an outer thread is formed on the outer periphery of the shaft portion 26, for example in the form of a coarse thread.

At least one arcuate protrusion 32 is formed on the flange facing 28, which is oriented substantially radially. As is shown in Figures 1 and 2, the flange facing 28 in the present case includes two arcuate protrusions. The arcuate protrusions each extend over an angle a, which for example may lie in the range from 5° to 180°, in particular in the range from 30° to 90°, preferably 40° to 80°. The peripheral length of the arcuate protrusions 32 is in each case at least 2 times, in particular 3 times, and preferably 4 times, greater than the radial width of the arcuate protrusions 32. The arcuate protrusions 32 lie on a common radius R. The radius R is smaller than the radius of a radial outer face 34 of the flange facing 28, and greater than the radius of a radial inner face 33 of the flange facing, the radial inner face 33 preferably being defined by the shaft portion 26 or the thread portion 30 thereof, and the radial outer face 34 preferably being defined by the outer periphery of the flange portion 24.

In radial section, the arcuate protrusions 32 are formed such that they taper from the flange facing and in particular taper in an acute-angled manner, as is indicated in Figure 1.

The mating fastening element 18 is formed in the present case in the manner of a nut, which has a main body 36 with a mating thread portion 38 in the form of an inner thread. The main body 36 is rigidly connected to one side of the support 14 via a schematically indicated joint 40, for example by means of an adhesive bonding process or a welding process.

An opening 42, which may be circular for example, is formed in the component 12. An opening 44 is formed accordingly in the support 14 and may be circular for example and has a diameter greater than the mating thread portion 38.

When screwing the fastening element 16 and the mating fastening element 18, the shaft portion 26 is initially passed through the openings 42, 44 until the thread portion 30 contacts the mating thread portion 38. A screwing process is then implemented until the arcuate protrusions 32 contact a surface 45 of the component 12. By continuing the screwing process, the protrusions 32 form a circular groove 46 in the surface 45, as is indicated schematically in Figure 1. In the screwed state, the protrusions 32 consequently engage in the groove 46 thus formed (which may be pressed in or cut in), such that the fastening assembly 10 can produce a high retaining force even if relatively high transverse forces 48 are applied to the component 12 in the direction transverse to the longitudinal axis 20. In other words, the component 12 can be prevented from being displaced relative to the support 14 when a transverse force 48 of this type is exerted onto the component 12.

A further embodiment of a fastening assembly 10' is illustrated in Figure 3 and corresponds generally to the fastening assembly 10 in Figures 1 and 2 in terms of structure and function. Like elements are therefore denoted by like reference signs. Mainly the differences will be explained hereinafter.

In the fastening assembly 10', the fastening element 16' is formed as a nut comprising a thread portion 30' in the form of an inner thread. The flange facing 28' is formed on an axial end face of the nut 16'. The mating fastening element 18' is formed as a stud, which is joined to a surface of the support 14, for example by welding or adhesive bonding, as is indicated at 40'. The stud 18' includes a shaft portion comprising a mating thread portion 38' in the form of an outer thread.

In this embodiment, it is advantageous if no opening 44 is provided in the support 14, but if the mating fastening element can be joined with access from one side to the support 14.

In the embodiment of the fastening assembly 10' in Figure 3 too, the arcuate protrusions 32 press or cut a groove 46 into the surface 45 of the component 12 during the screwing process, such that, in this embodiment, the same advantages are achieved as in the previous embodiment.

The axial length of the nut 16' is preferably formed such that it overlaps the mating thread portion 38' of the stud 18' in the axial direction, preferably over the entire periphery.

In both embodiments, it is advantageous for the fastening element 16, 16' to be produced from plastic, with a coarse thread, such that, during the screwing process, a coating possibly provided on the mating thread portion 38, 38' is not damaged. On the whole, high retaining forces can be achieved with the fastening assemblies 10, 10', in particular also in the radial direction, thus mitigating corrosion problems.

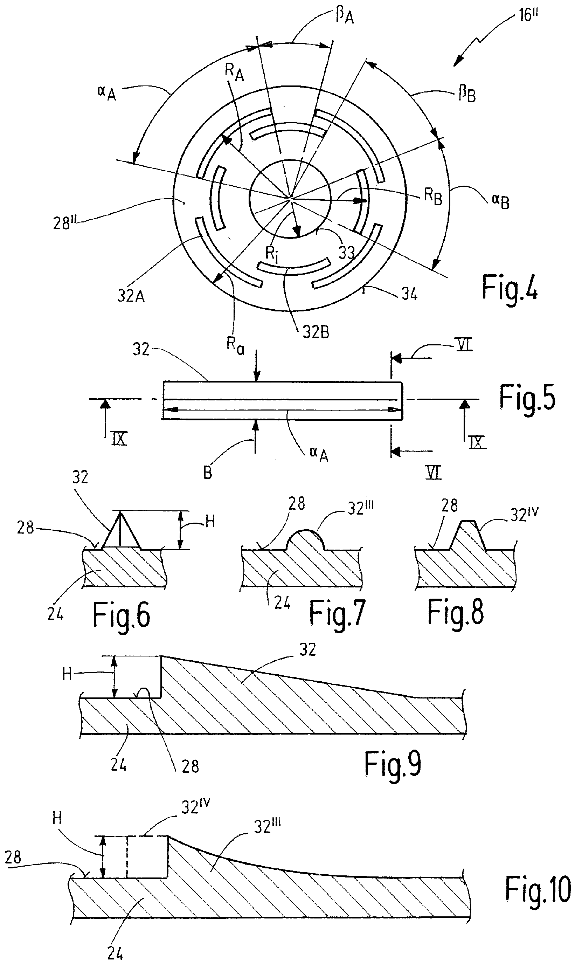

In the following Figures 4 to 10, embodiments of arcuate protrusions will be explained, which can be used both with the flange facing 28 of the fastening element 16 and with the flange facing 28' of the fastening element 16'.

Figure 4 shows a flange facing 28" of a fastening element 16", on which a first plurality of first arcuate protrusions 32A are provided and are distanced by a first radius R_{A} from the longitudinal or thread axis 20, a second plurality of second arcuate protrusions 32B further being formed on the flange facing 28" and being distanced by a second radius R_{B} from the thread axis, wherein R_{B} < R_{A}.

The first and the second arcuate protrusions 32A, 32B overlap in the peripheral direction.

The first arcuate protrusions 32A each extend over an angle α_{A} and are distanced from one another by an angle β_{A}. Accordingly, the second arcuate protrusions 32B each extend over an angle α_{B} and are distanced from one another by an angle β_{B}. Here, the following is preferably true: α_{B} < α_{A} and/or β_{B} > β_{A}.

It is further illustrated in Figure 4 that the radii R_{A}, R_{B} are each greater than a radius R_{I} of the radial inner face 33 of the flange facing 28", and are each smaller than a radius Rₐ of a radial outer face 34 of the flange facing 28".

Figure 5 shows a development of an arcuate protrusion 32 in plan view. It can be seen that the ratio of length in the peripheral direction (corresponding to the angle α_{A}) is at least 2 times greater than the radial width B.

Figure 6 shows a sectional view along the line VI-VI in Figure 5, and Figure 9 shows a sectional view along the line IX-IX in Figure 5. It can be seen that the radial protrusion in the peripheral direction has an axial height H increasing gradually, preferably linearly. It can also be seen that the protrusion 32 tapers in an acute-angled manner in radial section (Figure 6). On the whole, the arcuate protrusion 32 has the shape of a lathe tool cutting edge in this case.

Figure 7 shows an alternative embodiment of an arcuate protrusion 32'" in radial section. Here, the shape in radial section is approximately semi-circular. Figure 8 shows a corresponding modification 32^{IV}, in which the protrusion 32^{IV} is approximately trapezoidal in radial section. In all cases, the protrusion tapers in radial section starting from the flange facing 28.

Figure 10 shows an illustration comparable to Figure 9, in which the axial height of a protrusion 32'" does not rise linearly, but non-linearly, for example in a parabolic manner, in accordance with an E-function, logarithmically, etc.

Figure 10 further shows that the maximum height H with a further protrusion 32^{IV} may be constant over a certain peripheral portion. In Figures 9 and 10, the protrusion transitions from the maximum height H into the flange facing 28 in each case by a perpendicular transition. It goes without saying however that the transition may also be formed in an inclined manner.

The embodiments in Figures 6 to 8 and 9 and 10 can be combined with one another at will.

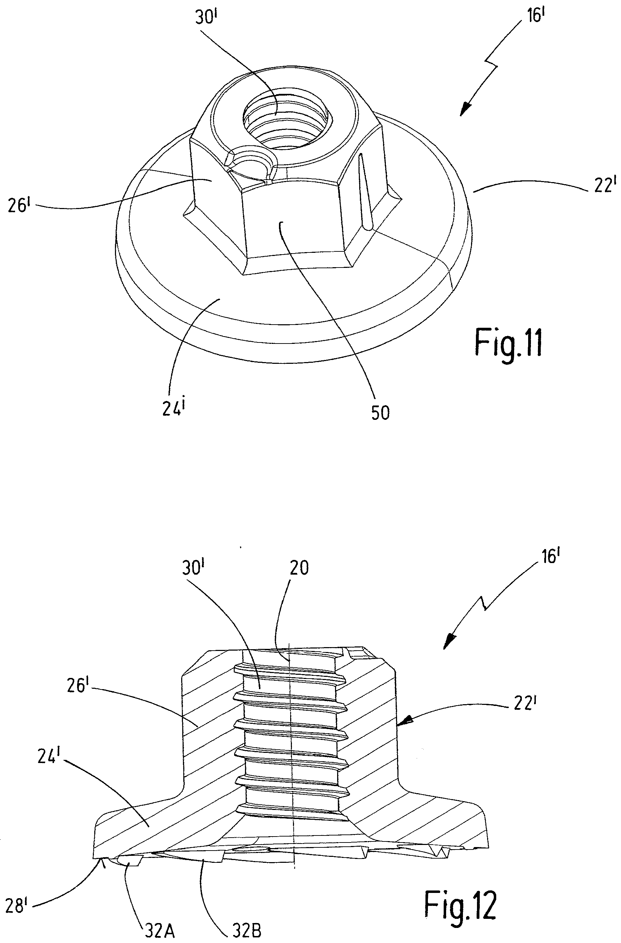

A further embodiment of a fastening element 16' is shown in Figures 11 to 13 and corresponds in general to the fastening element 16' in Figure 3 in terms of structure and function. Like elements are therefore denoted by like reference signs. Mainly the differences will be explained hereinafter.

With the fastening element 16' in Figures 11 to 13, a polygon shape 50 is provided on the outer periphery of a shaft portion 26' in order to be able to screw the fastening element 16' onto a stud 18' by means of a tool.

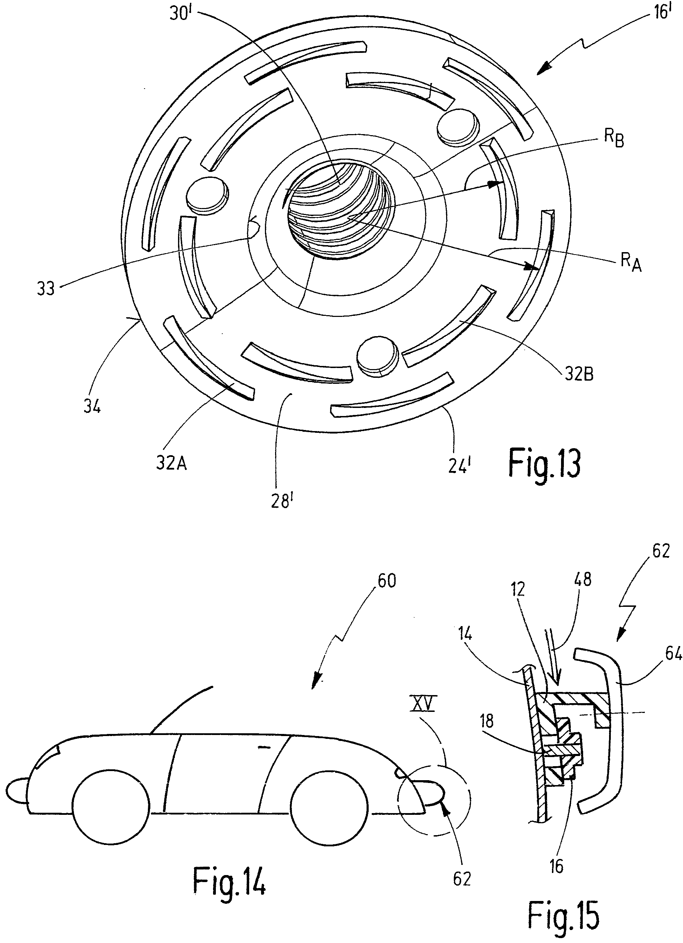

It can also be seen in Figure 13 that, similarly to the embodiment in Figure 4, a plurality of first arcuate protrusions 32A with a first radius R_{A} and a second plurality of second arcuate protrusions 32B with a second radius R_{B} are provided. The number of first and second arcuate protrusions is preferably identical.

The maximum height H of the arcuate protrusions is preferably less than 2 mm, in particular less than 1 mm, in all embodiments. Furthermore, the maximum height H of the arcuate protrusions is in each case preferably greater than 0.1 mm, in particular greater than 0.2 mm. A particularly preferred range of the maximum axial height H lies in the range from 0.25 mm to 0.5 mm.

A motor vehicle 60 is illustrated schematically in Figure 14 and has a bumper assembly 62. Figure 15 shows a detail XV in Figure 14, a stud 18 being connected to a support 14, as in the embodiment in Figure 3. Furthermore, a component 12 in the form of a bumper rail made of plastic is fixed to the support 14 by means of a fastening element 16.

The bumper assembly 62 here includes a schematically illustrated bumper 64, which in turn is fixed to the component 12. Even if high forces are exerted transversely to a longitudinal axis of the fastening assembly onto the bumper 64, high radial retaining forces can be achieved with the above-described fastening assemblies.

## Claims

1. Fastening assembly (10) with a plastic fastening element (16) comprising a main body (22) which has a thread portion (30) with a thread axis (20) and on which a flange facing (28) is formed which is oriented transversely to the thread axis (20) and is arranged around the thread portion (30), the flange facing (28) being formed so as to bear against a surface (45) of a component (12) to be fastened by means of the fastening element (16), wherein
at least one protrusion (32), which is arcuate in plan view and which is suitable for cutting or pressing a circular groove into the surface (45) of the component (12), is formed on the flange facing (28), and with a mating fastening element (18) which has a mating thread portion (38) corresponding to the thread portion (30) of the fastening element (16), and wherein the component is fastened by the fastening element (16) such that the arcuate protrusion (32) lies in a groove pressed or cut by the arcuate protrusion (32).

2. Fastening assembly according to Claim 1, **characterized in that** the arcuate protrusion (32) is oriented concentrically with the thread axis (20).

3. Fastening assembly according to Claim 1 or 2, **characterized in that** the arcuate protrusion (32) is distanced from a radial inner face (33) and/or from a radial outer face (34) of the flange facing (28).

4. Fastening assembly according to one of Claims 1 - 3, **characterized in that** the axial height (H) of the arcuate protrusion (32) increases in the peripheral direction in accordance with the thread portion (30).

5. Fastening assembly according to one of Claims 1 - 4, **characterized in that** the arcuate protrusion (32) in radial section has a shape tapering from the flange facing (28).

6. Fastening assembly according to one of Claims 1 - 5, **characterized in that** the arcuate protrusion (32) extends over an angle (a) in a range from 5 degrees to 180°.

7. Fastening assembly according to one of Claims 1 - 6, a plurality of arcuate protrusions (32) having the same radius (R) being formed on the flange facing (28).

8. Fastening assembly according to Claim 7, **characterized in that** at least two of the arcuate protrusions (32) are distanced from one another in the peripheral direction.

9. Fastening assembly according to one of Claims 1 - 8, **characterized in that** at least one first arcuate protrusion (32A) which is distanced by a first radius (R_{A}) from the thread axis (20) and at least one second arcuate protrusion (32B) which is distanced by a second radius (R_{B}) from the thread axis (20) are formed on the flange facing (28), the second radius (R_{B}) being smaller than the first radius (R_{A}).

10. Fastening assembly according to one of Claims 1 - 9, **characterized in that** a first plurality of first arcuate protrusions (32A) which are distanced by a first radius (R_{A}) from the thread axis (20) and at least one second plurality of second arcuate protrusions (32B) which are distanced by a second radius (R_{B}) from the thread axis (20) are formed on the flange facing (28), the second radius (R_{B}) being smaller than the first radius (R_{A}).

11. Fastening assembly according to Claim 10, **characterized in that** the first and second arcuate protrusions (32A, 32B) overlap in the peripheral direction.

12. Fastening assembly according to one of Claims 1 - 11, **characterized in that** the fastening element (38') is a nut comprising an inner thread as thread portion (30).

13. Fastening assembly according to any of Claims 1 - 12, **characterized in that** the mating fastening element (18) is produced from metal and is coated preferably at least in the region of the mating thread portion (38).

14. Motor vehicle (60) comprising a support (14), to which a component (12) is fastened by means of a fastening assembly (10) according to any of Claims 1 - 13, the mating fastening element (18) being fastened to the support (14) and a portion of the component (12) being arranged between the support (14) and the flange facing (28), the arcuate protrusion (32) cutting or pressing a groove (46) extending in the peripheral direction into a surface (45) of the component portion as a result of the thread engagement.

## Patentansprüche

1. Befestigungsanordnung (10) mit einem Kunststoff-Befestigungselement (16) mit einem Grundkörper (22), der einen Gewindeabschnitt (30) mit einer Gewindeachse (20) aufweist und an dem eine Flanschfläche (28) ausgebildet ist, die quer zu der Gewindeachse (20) ausgerichtet und um den Gewindeabschnitt (30) herum angeordnet ist, wobei die Flanschfläche (28) zur Anlage an einer Oberfläche (45) eines mittels des Befestigungselementes (16) zu befestigenden Bauteils (12) ausgebildet ist, wobei an der Flanschfläche (28) wenigstens ein in der Draufsicht bogenförmiger Vorsprung (32) ausgebildet ist, wobei der Vorsprung ist dazu geeignet, eine kreisförmige Furche in eine Oberfläche eines Bauteils zu schneiden oder zu drücken, und mit einem Gegen-Befestigungselement (18), das einen dem Gewindeabschnitt (30) des Befestigungselementes (16) entsprechenden Gegen-Gewindeabschnitt (38) aufweist, und wobei das Bauteil (12) bei dem Befestigungselement (16) befestigt ist, so dass der bogenförmige Vorsprung (32) in der von dem bogenförmigen Vorsprung gedrückten oder geschnittenen Furche liegt.

2. Befestigungsanordnung nach Anspruch 1, **dadurch gekennzeichnet, dass** der bogenförmige Vorsprung (32) konzentrisch zu der Gewindeachse (20) ausgerichtet ist.

3. Befestigungsanordnung nach Anspruch 1 oder 2, **dadurch gekennzeichnet, dass** der bogenförmige Vorsprung (32) von einer radialen Innenseite (33) und/oder von einer radialen Außenseite (34) der Flanschfläche (28) beabstandet ist.

4. Befestigungsanordnung nach einem der Ansprüche 1 - 3, **dadurch gekennzeichnet, dass** die axiale Höhe (H) des bogenförmigen Vorsprungs (32) sich in Umfangsrichtung entsprechend dem Gewindeabschnitt (30) vergrößert.

5. Befestigungsanordnung nach einem der Ansprüche 1 - 4, **dadurch gekennzeichnet, dass** der bogenförmige Vorsprung (32) im Radialschnitt eine sich von der Flanschfläche (28) aus verjüngende Form aufweist.

6. Befestigungsanordnung nach einem der Ansprüche 1 - 5, **dadurch gekennzeichnet, dass** der bogenförmige Vorsprung (32) sich über einen Winkel (α) in einem Bereich von 5 Grad bis 180° erstreckt

7. Befestigungsanordnung nach einem der Ansprüche 1 - 6, an der Flanschfläche (28) eine Mehrzahl von bogenförmigen Vorsprüngen (32) mit dem gleichen Radius (R) ausgebildet ist.

8. Befestigungsanordnung nach Anspruch 7, **dadurch gekennzeichnet, dass** wenigstens zwei der bogenförmigen Vorsprünge (32) in Umfangsrichtung voneinander beabstandet sind.

9. Befestigungsanordnung nach einem der Ansprüche 1 - 8, **dadurch gekennzeichnet, dass** an der Flanschfläche (28) wenigstens ein erster bogenförmiger Vorsprung (32A) ausgebildet ist, der mit einem ersten Radius (RA) von der Gewindeachse (20) beabstandet ist, und wenigstens ein zweiter bogenförmiger Vorsprung (32B) ausgebildet ist, der mit einem zweiten Radius (RB) von der Gewindeachse (20) beabstandet ist, wobei der zweite Radius (RB) kleiner ist als der erste Radius (RA).

10. Befestigungsanordnung nach einem der Ansprüche 1 - 9, **dadurch gekennzeichnet, dass** an der Flanschfläche (28) eine erste Mehrzahl von ersten bogenförmigen Vorsprüngen (32A) ausgebildet ist, die mit einem ersten Radius (RA) von der Gewindeachse (20) beabstandet sind, und wenigstens eine zweite Mehrzahl von zweiten bogenförmigen Vorsprüngen (32B) ausgebildet ist, die mit einem zweiten Radius (RB) von der Gewindeachse (20) beabstandet sind, wobei der zweite Radius (RB) kleiner ist als der erste Radius (RA).

11. Befestigungsanordnung nach Anspruch 10, **dadurch gekennzeichnet, dass** die ersten und die zweiten bogenförmigen Vorsprünge (32A, 32B) sich in Umfangsrichtung überlappen.

12. Befestigungsanordnung nach einem der Ansprüche 1 - 11, **dadurch gekennzeichnet, dass** das Befestigungselement (38') eine Mutter mit einem Innengewinde als Gewindeabschnitt (30) ist.

13. Befestigungsanordnung nach einem der Ansprüche 1 - 12, **dadurch gekennzeichnet, dass** das Gegen-Befestigungselement (18) aus Metall hergestellt und vorzugsweise zumindest im Bereich des Gegen-Gewindeabschnittes (38) beschichtet ist.

14. Kraftfahrzeug (60) mit einem Träger (14), an dem ein Bauteil (12) mittels einer Befestigungsanordnung (10) nach einem der Ansprüche 1 - 13 befestigt ist, wobei das Gegen-Befestigungselement (18) an dem Träger (14) festgelegt ist und wobei ein Abschnitt des Bauteils (12) zwischen dem Träger (14) und der Flanschfläche (28) angeordnet ist, wobei der bogenförmige Vorsprung (32) aufgrund des Gewindeeingriffs eine sich in Umfangsrichtung erstreckende Furche (46) in eine Oberfläche (45) des Bauteilabschnittes geschnitten oder gedrückt hat.

## Revendications

1. Ensemble de fixation (10) avec un élément de fixation en plastique (16) comprenant un corps principal (22) qui a une partie filetée (30) avec un axe fileté (20) et sur laquelle est formée une face de joint dressée (28) qui est orientée de manière transversale par rapport à l'axe fileté (20) et est agencée autour de la partie filetée (30), la face de joint dressée (28) étant formée de façon à reposer contre une surface (45) d'un composant (12) à fixer au moyen de l'élément de fixation (16), dans lequel
au moins une saillie (32), qui est incurvée dans une vue en plan et qui est adaptée pour couper ou presser une rainure circulaire dans la surface (45) du composant (12), est formée sur la face de joint dressée (28), et avec un élément de fixation de jonction (18) qui a une partie filetée de jonction (38) correspondant à la partie filetée (30) de l'élément de fixation (16), et dans lequel le composant est fixé par l'élément de fixation (16) de sorte que la saillie incurvée (32) repose dans une rainure pressée ou coupée par la saillie incurvée (32).

2. Ensemble de fixation selon la revendication 1, **caractérisé en ce que** la saillie incurvée (32) est orientée de manière concentrique par rapport à l'axe fileté (20).

3. Ensemble de fixation selon la revendication 1 ou 2, **caractérisé en ce que** la saillie incurvée (32) est espacée d'une face interne radiale (33) et/ou d'une face externe radiale (34) de la face de joint dressée (28).

4. Ensemble de fixation selon l'une des revendications 1 à 3, **caractérisé en ce que** la hauteur axiale (H) de la saillie incurvée (32) augmente dans la direction périphérique en fonction de la partie filetée (30).

5. Ensemble de fixation selon l'une des revendications 1 à 4, **caractérisé en ce que** la saillie incurvée (32) dans la section radiale a une forme s'effilant à partir de la face de joint dressée (28).

6. Ensemble de fixation selon l'une des revendications 1 à 5, **caractérisé en ce que** la saillie incurvée (32) s'étend sur un angle (α) dans une plage de 5 degrés à 180°.

7. Ensemble de fixation selon l'une des revendications 1 à 6, une pluralité de saillies incurvées (32) ayant le même rayon (R) étant formées sur la face de joint dressée (28).

8. Ensemble de fixation selon la revendication 7, **caractérisé en ce qu'**au moins deux des saillies incurvées (32) sont espacées l'une de l'autre dans la direction périphérique.

9. Ensemble de fixation selon l'une des revendications 1 à 8, **caractérisé en ce qu'**au moins une première saillie incurvée (32A) qui est espacée d'un premier rayon (R_{A}) de l'axe fileté (20) et au moins une seconde saillie incurvée (32B) qui est espacée d'un second rayon (R_{B}) de l'axe fileté (20) sont formées sur la face de joint dressée (28), le second rayon (R_{B}) étant inférieur au premier rayon (R_{A}).

10. Ensemble de fixation selon l'une des revendications 1 à 9, **caractérisé en ce qu'**une première pluralité de premières saillies incurvées (32A) qui sont espacées d'un premier rayon (R_{A}) de l'axe fileté (20) et au moins une seconde pluralité de secondes saillies incurvées (32B) qui sont espacées d'un second rayon (R_{B}) de l'axe fileté (20) sont formées sur la face de joint dressée (28), le second rayon (R_{B}) étant inférieur au premier rayon (R_{A}).

11. Ensemble de fixation selon la revendication 10, **caractérisé en ce que** les premières et secondes saillies incurvées (32A, 32B) se chevauchent dans la direction périphérique.

12. Ensemble de fixation selon l'une des revendications 1 à 11, **caractérisé en ce que** l'élément de fixation (38') est un écrou comprenant un filet intérieur en tant que partie filetée (30).

13. Ensemble de fixation selon l'une quelconque des revendications 1 à 12, **caractérisé en ce que** l'élément de fixation de jonction (18) est produit à partir de métal et est revêtu de préférence au moins dans la région de la partie filetée de jonction (38).

14. Véhicule à moteur (60) comprenant un support (14), auquel un composant (12) est fixé au moyen d'un ensemble de fixation (10) selon l'une quelconque des revendications 1 à 13, l'élément de fixation de jonction (18) étant fixé au support (14) et une partie du composant (12) étant agencée entre le support (14) et la face de joint dressée (28), la saillie incurvée (32) coupant ou pressant une rainure (46) s'étendant dans la direction périphérique dans une surface (45) de la partie de composant du fait de la mise en prise du filet.
